# EUROPÄISCHE PATENTSCHRIFT

(11) **EP 1 591 047 B1**
(45) Veröffentlichungstag und Bekanntmachung des Hinweises auf die Patenterteilung: **26.11.2008**
(21) Anmeldenummer: 05003803.3
(22) Anmeldetag: 22.02.2005
(51) Int. Cl.: A47J 25/00

(54) **Zange zum Entfernen unerwünschter oder ungeniessbarer Bereiche aus Gemüsen, Früchten oder Knollen**
Tongs for removing unwanted or unpalatable parts of fruit or vegetables
Pince pour enlever des parts indésirable ou immangeable de fruits ou légumes

(30) Priorität: 27.04.2004 DE 202004006686 U
(43) Veröffentlichungstag der Anmeldung: 02.11.2005
(73) Patentinhaber: Silit-Werke GmbH & Co. KG, D-88499 Riedlingen (DE)
(72) Erfinder: Bettinger, Stefanie, 88499 Riedlingen-Daugendorf (DE); Fix, Gudrun, 88499 Altheim (DE); Roth, Klaus, 88527 Unlingen (DE); Fingerle, Hans, 88499 Riedlingen (DE)
(74) Vertreter: Tönhardt, Marion

(56) Entgegenhaltungen:
- EP-A- 1 464 261
- DE-U- 9 308 453
- DE-U1- 8 519 521
- US-A- 1 351 216
- US-A- 2 325 031

## Beschreibung

Die Erfindung betrifft eine Vorrichtung zum Entfernen unerwünschter oder ungenießbarer Bereiche aus Gemüsen, Früchten oder Knollen, die sich von deren Oberfläche nach innen erstrecken, mit zwei einander gegenüberstehenden Armen aus elastischem Material, die an einem Ende miteinander verbunden sind und deren freie Enden jeweils mindestens eine Schneide aufweisen.

Eine derartige Vorrichtung ist aus der DE 93 08 453 U1 bekannt. Sie dient dazu, beispielsweise die sogenannten Augen auf der Oberfläche von Kartoffeln oder die "Blüten" von Tomaten oder anderen Früchten zu entfernen. Als Blüten bezeichnet man die verhärteten Teile der Frucht, die von dem Stengel bzw. Blütenansatz aus häufig bis zu einem Drittel des Durchmessers der Frucht in diese hineinragen. Das Entfernen gelingt bei der bekannten Vorrichtung durch eine besondere Ausgestaltung der Klingen, die die Form gleichschenkliger Dreiecke haben, wobei die Klingen winkelig zueinander angeordnet sind. Beim Eindrücken in die Frucht bewegen sich die beiden Arme selbsttätig aufeinander zu, so dass, wenn sie aneinanderliegen, ein die Blüte bzw. die schadhafte Stelle umgebendes Stück aus der Frucht herausgeschnitten ist und in Form einer vierseitigen Pyramide zwischen den Klingenpaaren sitzt. Bei geschlossen gehaltenen Klingenpaaren kann dieses Stück aus der Frucht entnommen werden.

Aus der EP 1464 261 A1 ist eine Vorrichtung zum Schälen und Entkernen von Äpfeln bekannt, bei der zwei längliche U-förmige Ausstechelemente über ein Federelement miteinander verbunden sind und stirnseitig im wesentlichen in axialer Richtung wirkende Schneidvorrichtungen aufweisen. Des weiteren weisen die U-förmigen Ausstechelemente mindestens eine Schnittkante auf, welche im wesentlichen axial in bezug auf das Ausstechelement verläuft. Eine Fixiervorrichtung vermeidet ein seitliches Abgleiten der Ausstechelemente während des Ausstechvorgangs.

US 2,325,031 offenbart einen Ausstecher, bei dem zwei Arme wie bei einer Schere aufeinander zu geführt werden. Das jeweilige freie Ende eines Arms ist in radialer Richtung gerundet ausgebildet, wie auch die beiden Arme selber. Das freie ende ist jeweils geschärft. Die Oberfläche der in radialer Richtung gerundet ausgebildeten Arme ist jeweils auf der dem anderen Arm zugewandten Seite glatt, bis auf die Verbindungsstelle mit den Hebeln.

Aus DE 85 19 521 U1 ist ein Haushalts-Schneidgerät von der Grundform eines Apfelausstechers bekannt, der zweiteilig ist und um eine Querachse zusammengeklappt werden kann, wobei der eine Teil in einem Hohlraum des anderen Teils verdeckt liegt.

Es ist eine Aufgabe der Erfindung eine Vorrichtung der eingangs genannten Gattung zur Verfügung zu stellen, welche saubere Schnittkanten für den auszustechenden Bereich liefert.

Es ist eine andere Aufgabe der Erfindung, eine Vorrichtung der eingangs genannten Gattung zur Verfügung zu stellen, welche saubere Schnittkanten für den auszustechenden Bereich liefert, sich raumsparend aufbewahren läßt und sowohl für normalgroße Tomaten wie auch für Tomaten mit größerem Strunk verwendet werden kann.

Diese Aufgabe wird durch eine Vorrichtung nach Anspruch 1 gelöst. Vorteilhafte Ausgestaltungen sind Gegenstand der Unteransprüche.

Erfindungsgemäß ist vorgesehen, dass zumindest im Bereich der freien Enden in radialer Richtung jedes Armes dieser gerundet ausgebildet ist, wobei zumindest an der gerundeten

Stirnseite eine Schneide vorgesehen ist. Anstatt mit einer spitzen Klinge in den auszustechenden Bereich einzudringen, kann nun unter leichtem Drehen ein sauberer Schnitt eingedrückt werden. Um die Blüte einer Tomate zu entfernen, kann beispielsweise unter leichtem Drehen in die Tomate hineingedrückt werden, bis der Widerstand spürbar nachlässt. Bei geschlossenen Armen kann dann die erfindungsgemäße Vorrichtung weiter gedreht und herausgezogen werden, wobei durch das federnde Material ein fester Halt des Blüten- oder Strunkbereiches gewährleistet ist, solange der Benutzer die sich vom verjüngenden Arme der Vorrichtung zusammendrückt.

Des weiteren ist erfindungsgemäß ein Feststellmechanismus vorgesehen, welcher die Arme in einer definierten Position zueinander hält. Hierdurch lässt sich die erfindungsgemäße Vorrichtung nicht nur raumsparend aufbewahren, beispielsweise bei normal großen Tomaten, wie Strauchtomaten, kann die Vorrichtung im geschlossenen festgestellten Zustand hineingedrückt und gedreht werden. Bei Tomaten mit einem größeren Strunk, wie Fleischtomaten, kann die Vorrichtung - je nach Größe der Blüte bzw. des Strunks - leicht geöffnet und so in die Frucht hineingedrückt werden. Nach dem Drehen wird dann die Vorrichtung mittels des Feststellmechanismus geschlossen und dann mit dem zu entfernenden Bereich herausgezogen.

Nach einer bevorzugten Ausgestaltung weist der Feststellmechanismus eine verschiebebewegliche Taste an einem ihrer Arme auf, welche zwischen einer Offen- und einer Schließstellung bewegbar ist, wobei sie in der Schließstellung in Kontakt mit einem Eingriffselement am anderen Arm ist.

Das Eingriffselement kann eine Öse sein, durch die eine an der Taste befindliche Lasche in der Schließstellung greift. Es ist aber auch denkbar, als Eingriffselement einen Magneten vorzusehen, wobei die Taste dann einen entsprechenden Gegen-Magneten aufweist.

Nach einer bevorzugten Ausgestaltung ist im Bereich der freien Enden jedes Armes zumindest eine Schneide in axialer Richtung an einer oder beiden Kanten vorgesehen. Die Funktion wird dadurch noch verbessert.

Besonders vorteilhaft kann im Bereich der freien Enden der Arme zumindest an einem Arm eine in Richtung auf den anderen Arm hervorstehende Rippe ausgebildet sein. Diese dringt bei geschlossen gehaltenen Armen in das Frucht- bzw. Gemüsefleisch ein und hält es bei der Drehbewegung, so dass das Abschneiden im Bodenabschnitt des zu entfernenden Bereiches noch besser gelingt. Wenn die Rippe keilförmig ausgestaltet ist, wobei sie sich zur Stirnfläche des Armes hin verjüngt und am entgegengesetzten Ende mit einer steilen Stufe ausgebildet ist, kann auch die Rückholfunktion weiter verbessert werden.

Bevorzugt sind die Arme über eine U-förmiges Anschlußteil miteinander verbunden, wobei besonders bevorzugt Arme und Anschlußteil einstückig ausgebildet sind. Ein besonders geeignetes Material für die erfindungsgemäße Vorrichtung ist Edelstahl, aber auch andere elastische bzw. federnde Materialien, wie Kunststoffe, können eingesetzt werden.

Im folgenden soll die Erfindung anhand der beigefügten Zeichnung näher erläutert werden. Es zeigt:
- Figur 1: eine perspektivische Ansicht einer Ausführungsform einer Vorrichtung gemäß der vorliegenden Erfindung;
- Figur 2: eine Längsschnittansicht der Vorrichtung aus Figur 1 im geschlossenen Zustand; und
- Figur 3: eine Seitenansicht der Vorrichtung der Figur 1 im geöffneten Zustand.

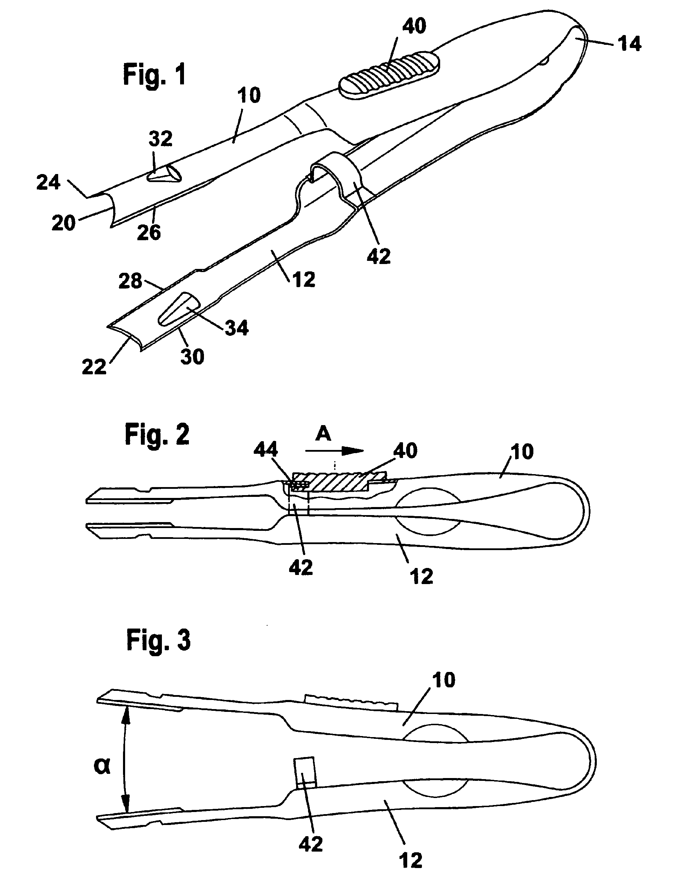

Die in Figur 1 gezeigte Ausführungsform der erfindungsgemäßen Vorrichtung besteht aus zwei einander gegenüberstehenden Armen 10, 12, die an einem ihrer Enden über ein U-förmiges Anschlußteil 14 miteinander verbunden sind. Arme 10, 12 und Anschlußteil 14 sind einstückig ausgebildet. Im Bereich der freien Enden der Arme 10, 12 sind diese mit einer Rundung ausgebildet, so dass sie im geschlossenen Zustand an ihren Stirnflächen nahezu einen Kreis definieren. An den Stirnflächen sind jeweils Schneiden 20, 22 vorgesehen, die ebenfalls einstückig mit den Armen 10, 12 ausgebildet und an ihren Innenkanten geschliffen sind, wobei die Schneiden 20, 22 gerundet verlaufen und in Spitzen enden, wie besonders gut für den Arm 12 zu erkennen ist. Jeder Arm 10, 12 weist weiterhin sich in axialer Richtung erstrekkende, an den Kanten vorgesehene Schneiden 24 und 26 bzw. 28 und 30 auf. Diese Schneiden sind ebenfalls einstückig mit den Armen 10, 12 ausgebildet und an ihren Außenkanten geschliffen. Jeder der Arme 10, 12 zeigt, bei der Ausführungsform im Bereich zwischen den Schneiden 24 und 26 bzw. 28 und 30 angeordnet, jeweils eine keilförmige Rippe 32 bzw. 34, bei denen die keilförmige Verjüngung in Richtung zur Stirnseite jedes Armes 10 bzw. 12 weist, während in entgegengesetzter Richtung eine scharf abfallende Stufe vorgesehen ist. Die Rippen 32, 34 werden bevorzugt durch Einstanzen des Materials der Arme 10, 12 gebildet. An dem Arm 10 ist im hinteren Bereich, nahe des Anschlußteils 14, eine verschiebebewegliche Taste 40 vorgesehen, die zusammen mit einer Öse am Arm 12, die durch einen den Arm übergreifenden Streifen 42 gebildet wird, einen Feststellmechanismus bildet. Dieser Feststellmechanismus wird im Zusammenhang mit Figur 2 näher erläutert.

In Figur 2 ist die Vorrichtung im Schließzustand gezeigt. Um sie zu öffnen, wird die Taste 40 in Richtung des Pfeils A bewegt. Eine Lasche 44, die sich an der Unterseite der Taste 40 befindet, wird dann aus der durch den Streifen 42 definierten Öse gezogen und gibt diese frei. Die Arme 10, 12 können dann in eine Offenstellung veschwenken, die in Figur 3 dargestellt ist.

Figur 3 zeigt, wie die Arme 10, 12 nun unter einem Winkel α zueinander stehen, der beispielsweise im Bereich von 20 bis 25° liegt. Der die Öse definierende Streifen 42 steht frei und ist derart am Arm angeordnet, dass die Schneidbewegung der freien Enden nicht behindert wird.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche (Patentansprüche für folgende(n) Vertragsstaat(en): AT, BE, BG, CH, CY, CZ, DE, DK, EE, ES, FI, FR, GB, GR, HU, IE, IT, LI, LU, MC, NL, PT, SE, SI, SK, TR)

1. Vorrichtung zum Entfernen unerwünschter oder ungenießbarer Bereiche aus Gemüsen, Früchten oder Knollen, die sich von deren Oberfläche nach innen erstrecken, mit zwei einander gegenüberstehenden Armen (10, 12) aus elastischem Material, die an einem Ende miteinander verbunden sind und deren freie Enden jeweils mindestens eine Schneide (20, 22, 24, 26, 28, 30) aufweisen, wobei zumindest im Bereich der freien Enden in radialer Richtung jedes Armes (10, 12) diese gerundet ausgebildet ist und zumindest an der gerundeten Stirnseite eine Schneide (20, 22) vorgesehen ist,
**dadurch gekennzeichnet, dass**
ein Feststellmechanismus (40, 42, 44) vorgesehen ist, welcher die Arme (10, 12) in einer definierten Position zueinander hält.

2. Vorrichtung nach Anspruch 1, **dadurch gekennzeichnet, dass** der Feststellmechanismus (40, 42, 44) eine verschiebebewegliche Taste (40) an einem ihrer Arme (10) aufweist, welche zwischen einer Offen- und einer Schließstellung bewegbar ist, wobei sie in der Schließstellung in Kontakt mit einem Eingriffselement (42) am anderen Arm (12) ist.

3. Vorrichtung nach Anspruch 2, **dadurch gekennzeichnet, dass** das Eingriffselement eine Öse ist, durch die eine an der Taste (40) befindliche Lasche (44) in der Schließstellung greift.

4. Vorrichtung nach Anspruch 2, **dadurch gekennzeichnet, dass** das Eingriffselement ein Magnet ist und dass die Taste einen Magneten aufweist.

5. Vorrichtung nach Anspruch 1, **dadurch gekennzeichnet, dass** im Bereich der freien Enden jedes Armes (10, 12) zumindest eine Schneide (24, 26, 28, 30) in axialer Richtung an einer oder beiden Kanten vorgesehen ist.

6. Vorrichtung nach Anspruch 1 oder 5, **dadurch gekennzeichnet, dass** im Bereich der freien Enden der Arme (10, 12) zumindest an einem Arm eine in Richtung auf den anderen Arm hervorstehende Rippe (32, 34) ausgebildet ist.

7. Vorrichtung nach Anspruch 6, **dadurch gekennzeichnet, dass** die Rippe (32, 34) sich in Richtung zur Stirnfläche des jeweiligen Armes (10, 12) keilförmig verjüngt und in entgegengesetzter Richtung eine Stufe bildet.

8. Vorrichtung nach einem der Ansprüche 1 bis 7, **dadurch gekennzeichnet, dass** die Arme (10,12) über ein U-förmiges Anschlußteil (14) miteinander verbunden sind.

9. Vorrichtung nach Anspruch 8, **dadurch gekennzeichnet, dass** Arme (10, 12) und Anschlußteil (14) einstückig ausgebildet sind.

10. Vorrichtung nach einem der Ansprüche 1 bis 9, hergestellt aus Edelstahl.

## Patentansprüche (Patentansprüche für folgende(n) Vertragsstaat(en): IS, LT, PL, RO)

1. Vorrichtung zum Entfernen unerwünschter oder ungenießbarer Bereiche aus Gemüsen, Früchten oder Knollen, die sich von deren Oberfläche nach Innen erstrecken, mit zwei einander gegenüberstehenden Armen (10, 12) aus elastischem Material, die an einem Ende miteinander verbunden sind und deren freie Enden jeweils mindestens eine Schneide (20, 22, 24, 26, 28, 30) aufweisen,
**dadurch gekennzeichnet, dass**
zumindest im Bereich der freien Enden in radialer Richtung jedes Armes (10, 12) diese Schneide gerundet ausgebildet ist; und zumindest an der gerundeten Stirnseite eine Schneide (20,22) vorgesehen ist, und
im Bereich der freien Enden der Arme (10, 12) zumindest an einem Arm eine in Richtung auf den anderen Arm hervorstehende Rippe (32, 34) ausgebildet ist.

2. Vorrichtung nach Anspruch 1, **dadurch gekennzeichnet, dass** im Bereich der freien Enden jedes Armes (10, 12) zumindest eine Schneide (24, 26, 28, 30) in axialer Richtung an einer oder beiden Kanten vorgesehen ist.

3. Vorrichtung nach Anspruch 1 oder 2, **dadurch gekennzeichnet, dass** die Rippe (32, 34) sich in Richtung zur Stirnfläche des jeweiligen Armes (10, 12) keilförmig verjüngt und in entgegengesetzter Richtung eine Stufe bildet.

4. Vorrichtung nach einem der Ansprüche 1 bis 3, **dadurch gekennzeichnet, dass** ein Feststellmechanismus (40, 42, 44) vorgesehen ist, welcher die Arme (10, 12) in einer definierten Position zueinander hält.

5. Vorrichtung nach Anspruch 4, **dadurch gekennzeichnet, dass** der Feststellmechanismus (40, 42, 44) eine verschiebebewegliche Taste (40) an einem ihrer Arme (10) aufweist, welche zwischen einer Offen- und einer Schließstellung bewegbar ist, wobei sie in der Schließstellung in Kontakt mit einem Eingriffselement (42) am anderen Arm (12) ist.

6. Vorrichtung nach Anspruch 5, **dadurch gekennzeichnet, dass** das Eingriffselement eine Öse ist, durch die eine an der Taste (40) befindliche Lasche (44) in der Schließstellung greift.

7. Vorrichtung nach Anspruch 5, **dadurch gekennzeichnet, dass** das Eingriffselement ein Magnet ist und dass die Taste einen Magneten aufweist.

8. Vorrichtung nach einem der Ansprüche 1 bis 7, **dadurch gekennzeichnet, dass** die Arme (10, 12) über ein U-förmiges Anschlußteil (14) miteinander verbunden sind.

9. Vorrichtung nach Anspruch 8, **dadurch gekennzeichnet, dass** Arme (10, 12) und Anschlußteil (14) einstückig ausgebildet sind.

10. Vorrichtung nach einem der Ansprüche 1 bis 9, hergestellt aus Edelstahl.

## Claims (Claims for the following Contracting State(s): AT, BE, BG, CH, CY, CZ, DE, DK, EE, ES, FI, FR, GB, GR, HU, IE, IT, LI, LU, MC, NL, PT, SE, SI, SK, TR)

1. Device for removing unwanted or unpalatable parts of vegetables or fruit or lumps which extend inwards from the surface thereof, the device having two mutually opposite arms (10, 12) of elastic material, which arms are connected to each other at one end and the free ends of which each have at least one cutting edge (20, 22, 24, 26, 28, 30), wherein said cutting edge is of rounded design at least in the region of the free ends in the radial direction of each arm (10, 12), and one cutting edge (20, 22) is provided at least on the rounded end side, **characterized in that** a fixing mechanism (40, 42, 44) is provided, the fixing mechanism keeping the arms (10, 12) in a defined position with respect to each other.

2. Device according to Claim 1, **characterized in that** the fixing mechanism (40, 42, 44) has a displaceable button (40) on one of its arms (10), which button is movable between an open and a closed position, said button, in the closed position, being in contact with an engagement element (42) on the other arm (12).

3. Device according to Claim 2, **characterized in that** the engagement element is an eye through which a tab (44) located on the button (40) reaches in the closed position.

4. Device according to Claim 2, **characterized in that** the engagement element is a magnet, and **in that** the button has a magnet.

5. Device according to Claim 1, **characterized in that**, in the region of the free ends of each arm (10, 12), at least one cutting edge (24, 26, 28, 30) is provided on one or both edges in the axial direction.

6. Device according to Claim 1 or 5, **characterized in that**, in the region of the free ends of the arms (10, 12), a rib (32, 34) is formed at least on one arm, said rib protruding in the direction of the other arm.

7. Device according to Claim 6, **characterized in that** the rib (32, 34) tapers in a wedge-shaped manner in the direction of the end surface of the particular arm (10, 12) and forms a step in the opposite direction.

8. Device according to one of Claims 1 or 7, **characterized in that** the arms (10, 12) are connected to each via a U-shaped connecting part (14).

9. Device according to Claim 8, **characterized in that** arms (10, 12) and connecting part (14) are of integral design.

10. Device according to one of Claims 1 or 9, produced from stainless steel.

## Claims (Claims for the following Contracting State(s): IS, LT, PL, RO)

1. Device for removing unwanted or unpalatable parts of vegetables or fruit or lumps which extend inwards from the surface thereof, the device having two mutually opposite arms (10, 12) of elastic material, which arms are connected to each other at one end and the free ends of which each have at least one cutting edge (20, 22, 24, 26, 28, 30), **characterized in that** said cutting edge is of rounded design at least in the region of the free ends in the radial direction of each arm (10, 12), and one cutting edge (20, 22) is provided at least on the rounded end side, and, in the region of the free ends of the arms (10, 12), a rib (32, 34) is formed at least on one arm, said rib protruding in the direction of the other arm.

2. Device according to Claim 1, **characterized in that**, in the region of the free ends of each arm (10, 12), at least one cutting edge (24, 26, 28, 30) is provided on one or both edges in the axial direction.

3. Device according to Claim 1 or 2, **characterized in that** the rib (32, 34) tapers in a wedge-shaped manner in the direction of the end surface of the particular arm (10, 12) and forms a step in the opposite direction.

4. Device according to one of Claims 1 to 3, **characterized in that** a fixing mechanism (40, 42, 44) is provided, the fixing mechanism keeping the arms (10, 12) in a defined position with respect to each other.

5. Device according to Claim 4, **characterized in that** the fixing mechanism (40, 42, 44) has a displaceable button (40) on one of its arms (10), which button is movable between an open and a closed position, said button, in the closed position, being in contact with an engagement element (42) on the other arm (12).

6. Device according to Claim 5, **characterized in that** the engagement element is an eye through which a tab (44) located on the button (40) reaches in the closed position.

7. Device according to Claim 5, **characterized in that** the engagement element is a magnet, and **in that** the button has a magnet.

8. Device according to one of Claims 1 to 7, **characterized in that** the arms (10, 12) are connected to each other via a U-shaped connecting part (14).

9. Device according to Claim 8, **characterized in that** arms (10, 12) and connecting part (14) are of integral design.

10. Device according to one of Claims 1 to 9, produced from stainless steel.

## Revendications (Revendications pour l'(les) Etat(s) contractant(s) suivant(s): AT, BE, BG, CH, CY, CZ, DE, DK, EE, ES, FI, FR, GB, GR, HU, IE, IT, LI, LU, MC, NL, PT, SE, SI, SK, TR)

1. Dispositif pour enlever des parties indésirables ou non comestibles des légumes, fruits ou tubercules qui s'étendent depuis leur surface vers l'intérieur, le dispositif comprenant deux bras (10, 12) en matériau élastique opposés l'un à l'autre et reliés entre eux au niveau d'une extrémité, leurs extrémités libres présentant respectivement au moins une lame (20, 22, 24, 26, 28, 30), qui est de forme arrondie au moins dans la zone des extrémités libres dans la direction radiale de chaque bras (10, 12), une lame (20, 22) étant prévue au moins sur le côté frontal arrondi,
**caractérisé en ce qu**'un mécanisme de blocage (40, 42, 44) qui maintient les bras (10, 12) dans une position définie l'un par rapport à l'autre est prévu.

2. Dispositif selon la revendication 1, **caractérisé en ce que** le mécanisme de blocage (40, 42, 44) présente un bouton (40) mobile en translation sur l'un de ses bras (10), ledit bouton pouvant être déplacé entre une position d'ouverture et de fermeture et se trouvant dans la position en contact avec un élément de mise en prise (42) sur l'autre bras (12).

3. Dispositif selon la revendication 2, **caractérisé en ce que** l'élement de mise en prise est une boucle à travers laquelle passe une patte (44) se trouvant sur le bouton (40) dans la position de fermeture.

4. Dispositif selon la revendication 2, **caractérisé en ce que** l'élément de mise en prise est un aimant et **en ce que** le bouton présente un aimant.

5. Dispositif selon la revendication 1, **caractérisé en ce qu'**au moins une lame (24, 26, 28, 30) est prévue dans la direction axiale d'une ou deux arêtes, dans la zone des extrémités libres de chaque bras (10, 12).

6. Dispositif selon la revendication 1 ou 5, **caractérisé en ce qu'**au moins sur un bras, une nervure (32, 34) faisant saillie en direction de l'autre bras est réalisée, dans la zone des extrémités libres des bras (10, 12).

7. Dispositif selon la revendication 6, **caractérisé en ce que** la nervure (32, 34) s'amincit en forme de coin en direction de la surface frontale du bras respectif (10, 12) et forme un gradin dans la direction opposée.

8. Dispositif selon l'une quelconque des revendications 1 à 7, **caractérisé en ce que** les bras (10, 12) sont reliés entre eux par l'intermédiaire d'une pièce de raccordement en forme de U (14).

9. Dispositif selon la revendication 8, **caractérisé en ce que** les bras (10, 12) et la pièce de raccordement (14) sont réalisés d'un seul tenant.

10. Dispositif selon l'une quelconque des revendications 1 à 9, fabriqué en acier inoxydable.

## Revendications (Revendications pour l'(les) Etat(s) contractant(s) suivant(s): IS, LT, PL, RO)

1. Dispositif pour enlever des parties indésirables ou non comestibles des légumes, fruits ou tubercules qui s'étendent depuis leur surface vers l'intérieur, le dispositif comprenant deux bras (10, 12) en matériau élastique opposés l'un à l'autre et reliés entre eux au niveau d'une extrémité, leurs extrémités libres présentant respectivement au moins une lame (20, 22, 24, 26, 28, 30),
**caractérisé en ce que** la lame est de forme arrondie au moins dans la zone des extrémités libres dans la direction radiale de chaque bras (10, 12), une lame (20, 22) étant prévue au moins sur le côté frontal arrondi,
et **en ce que**, dans la zone des extrémités libres des bras (10, 12), au moins l'un des bras comporte une nervure (32, 34) faisant saillie en direction de l'autre bra.,

2. Dispositif selon la revendication 1, **caractérisé en ce qu'**au moins une lame (24, 26, 28, 30) est prévue dans la direction axiale d'une ou des deux arêtes, dans la zone des extrémités libres de chaque bras (10, 12).

3. Dispositif selon la revendication 1 ou 2, **caractérisé en ce que** la nervure (32, 34) s'amincit en forme de coin en direction de la surface frontale du bras respectif (10, 12) et forme un gradin dans la direction opposée.

4. Dispositif selon l'une des revendications 1 à 3, **caractérisé en ce qu'**il comprend un mécanisme de blocage (40, 42, 44) qui maintient les bras (10, 12) dans une position définie l'un par rapport à l'autre.

5. Dispositif selon la revendication 4, **caractérisé en ce que** le mécanisme de blocage (40, 42, 44) présente un bouton (40) mobile en translation sur l'un de ses bras (10), ledit bouton pouvant être déplacé entre une position d'ouverture et de fermeture et se trouvant dans la position de fermeture en contact avec un élément de mise en prise (42) sur l'autre bras (12).

6. Dispositif selon la revendication 5, **caractérisé en ce que** l'élément de mise en prise est une boucle à travers laquelle passe une patte (44) se trouvant sur le bouton (40) dans la position de fermeture.

7. Dispositif selon la revendication 5, **caractérisé en ce que** l'élément de mise en prise est un aimant et **en ce que** le bouton présente un aimant.

8. Dispositif selon l'une quelconque des revendications 1 à 7, **caractérisé en ce que** les bras (10, 12) sont reliés entre eux par l'intermédiaire d'une pièce de raccordement en forme de U (14).

9. Dispositif selon la revendication 8, **caractérisé en ce que** les bras (10, 12) et la pièce de raccordement (14) sont réalisés d'un seul tenant.

10. Dispositif selon l'une quelconque des revendications 1 à 9, fabriqué en acier inoxydable.
